# NEUE EUROPÄISCHE PATENTSCHRIFT

(11) **EP 4 103 301 B2**
(45) Veröffentlichungstag und Bekanntmachung des Hinweises auf die Entscheidung über den Einspruch: **05.08.2026**
(45) Hinweis auf die Patenterteilung: 06.03.2024
(21) Anmeldenummer: 21712946.9
(22) Anmeldetag: 09.02.2021
(51) Int. Cl.: B01D 45/08, F23J 15/00

(54) **VARIABLE INSTALLATION IN EINEM GASSTRÖMUNGSKANAL**
VARIABLE INSTALLATION IN A GAS FLOW CHANNEL
INSTALLATION VARIABLE DANS UN CANAL D'ÉCOULEMENT DE GAZ

(30) Priorität: 12.02.2020 DE 102020000892
(43) Veröffentlichungstag der Anmeldung: 21.12.2022
(73) Patentinhaber: Munters Euroform GmbH, 52068 Aachen (DE)
(72) Erfinder: WANDRES, Peter, 52066 Aachen (DE)
(74) Vertreter: Hauck Patent- und Rechtsanwälte PartmbB
(86) Internationale Anmeldenummer: PCT/DE2021/000023
(87) Internationale Veröffentlichungsnummer: WO 2021/160198

(56) Entgegenhaltungen:
- EP-A1- 0 864 345
- DE-U1- 202011 004 282
- US-A- 4 698 078
- US-A- 5 230 725

## Beschreibung

### GEÄNDERTE ABSÄTZE DER BESCHREIBUNG

Die vorliegende Erfindung betrifft eine als Agglomerator ausgebildete Installation in einem Gasströmungskanal mit einer ersten Lage und einer zweiten hierzu versetzten Lage aus waagerecht und im Abstand voneinander jeweils in einer Ebene quer zur Gasströmungsrichtung angeordneten stabförmigen Elementen, die sich quer über den Gasströmungskanal erstrecken. Des Weiteren betrifft die Erfindung einen Rauchgaswäscher mit einer erfindungsgemäßen Installation in einem Gasströmungskanal des Rauchgaswäschers.

Derartige Installationen werden schon lange in der Tropfenabscheiderbranche eingesetzt, vorwiegend als Drahtgestricke, aber auch als Stab- oder Rohragglomerator. Mit diesen Agglomeratoren können Grenztropfen bis ca. 3 um erreicht werden. Je kleiner die Grenztropfen, desto größer ist deren Druckverlust. Ferner wurden solche Rohragglomeratoren auch zur Staubwäsche verwendet. Bei diesem Verfahren werden die Agglomeratoren kontinuierlich mit Wasser beaufschlagt.

Der Druckverlust eines solchen Rohragglomerators kann bis zu zehnmal höher sein als der Druckverlust eines Tropfenabscheiders. Demzufolge würde der Einsatz eines kontinuierlich betriebenen Rohragglomerators einen sehr hohen Energieverbrauch verursachen, obwohl dies in vielen Fällen nicht notwendig ist. Da die entsprechende Installation im Gasströmungskanal fest angebracht ist, muss die zweistufig ausgebildete Installation in vielen Fällen automatisch "mitlaufen", obwohl dies in diesen Fällen gar nicht erforderlich ist. Daher wäre es sinnvoll, dass eine solche Installation nur dann ihre Funktion ausübt, wenn dies erforderlich ist, beispielsweise eine Staubbeladung in der Gasströmung (Abluft) anfällt.

Aus der DE 20 2011 004 282 U1 ist ein serviceoptimierter Tropfenabscheider für Rauchgasentschwefelungsanlagen mit rohrförmigen Prallkörpern bekannt, bei dem mindestens ein Rollenmodul pro Abscheidergasse klappbar aufgehängt ist. Diese Maßnahmen dienen dazu, um die Inspektion und Wartung des Rollenabscheiders zu erleichtern. Mit anderen Worten, der Rollenabscheider kann in seiner Außerbetriebsstellung aufgeklappt werden. Bei Inspektion und Wartung kann ein Mann das Modul vorsichtig nach oben klappen. Dadurch öffnet sich dann eine Lücke, durch die der Mitarbeiter in das Innere des Zwischenraumes zwischen den beiden Abscheiderlagen gelangen kann. Er kann dort Inspektionen durchführen oder auch Arbeiten vornehmen. Eine Bewegung der entsprechenden Installation im Betrieb der Anlage ist nicht möglich.

Aus US 5230725 A ist ein Tropfenabscheider zum Entfernen von Flüssigkeitströpfchen aus einem Gasstrom bekannt. Der Tropfenabscheider enthält eine erste Schicht aus mehreren parallel zueinander beabstandeten gekrümmten Trennwänden, die jeweilige Strömungskanäle zwischen den Trennwänden definieren. Eine zweite Schicht aus mehreren voneinander beabstandeten Trennwänden, die dazwischen entsprechende Strömungskanäle definieren, ist stromabwärts von der ersten Schicht in der Richtung des Luftstroms angeordnet. Die Trennwände der zweiten Schicht haben Einlasskanten, die in Ausrichtung mit den Ausgangsöffnungen der ersten Schicht angeordnet sind, die von den freien Randabschnitten der Trennwände in der ersten Schicht versetzt sind.

US 4698078 A beschreibt eine Abscheideranordnung für einen Luftkanal zum Entfernen von Partikeln, die in Luft mitgeführt werden, die durch den Luftkanal strömt. Der Abscheider kann zwischen einer ersten Position, in der Luft durch einen Separator hindurchgeht, und eine zweite Position, in der die Luft den Separator umgeht, bewegt werden.

Der vorliegenden Erfindung liegt die Aufgabe zugrunde, eine Installation der eingangs beschriebenen Art zur Verfügung zu stellen, die sich besonders effizient betreiben lässt.

Diese Aufgabe wird erfindungsgemäß bei einer Installation der angegebenen Art dadurch gelöst, dass sie eine Einrichtung zur Bewegung der zweiten Lage relativ zur ersten Lage oder der ersten Lage relativ zur zweiten Lage aus einer ersten Betriebsstellung in weitere Betriebsstellungen und/oder eine Außerbetriebsstellung durch Verschieben der Lage parallel zur Achse des Gasströmungskanales oder senkrecht hierzu umfasst.

Bei der erfindungsgemäßen Lösung befinden sich die beiden Lagen der Installation im Betrieb im Abstand voneinander im Gasströmungskanal, wobei die stabförmigen Elemente der ersten Lage relativ zu den stabförmigen Elementen der zweiten Lage versetzt angeordnet sind. Es wird dabei davon ausgegangen, dass es sich hierbei um eine optimale Betriebsstellung handelt. Soll nunmehr eine Lage eine andere Betriebsstellung oder eine Außerbetriebsstellung einnehmen, wird sie durch die vorgesehene Bewegungseinrichtung in diese geänderte Stellung bewegt. Hierdurch kann beispielsweise der Abstand zwischen den beiden Lagen oder aber beispielsweise die Überlappung der stabförmigen Elemente der beiden Lagen verändert werden. In jedem Fall kann aber auch die entsprechende Lage in eine Außerbetriebsstellung bewegt werden, in der sie keine Funktion oder nur noch eine reduzierte Funktion ausübt. Dies kann beispielsweise der Fall sein, wenn die Funktion einer Agglomeratorlage nicht mehr benötigt wird, um auf diese Weise entsprechend Energie zu sparen.

Beide Lagen der Installation können daher so relativ zueinander bewegt werden, dass sich optimierte Betriebsstellungen ergeben oder eine Lage vollständig außer Betrieb gesetzt wird.

Die erfindungsgemäße Installation ist als Agglomerator ausgebildet. Hierbei kommen als stabförmige Elemente vorzugsweise Rohre zur Anwendung, die in bestimmten Abständen voneinander angeordnet sind, um einen gewünschten Agglomeratoreffekt zu erzeugen. Die Stäbe bzw. Rohre der beiden Lagen sind hierbei versetzt zueinander angeordnet, d.h. sie überlappen sich in Gasströmungsrichtung, so dass die gewünschten Umlenkeffekte der Gasströmung erreicht werden. Die Abstände der Lagen voneinander bzw. die Abstände der Elemente der beiden Lagen (Überlappungsgrade) können hierbei erfindungsgemäß variiert werden.

Bei einer nicht von den Ansprüchen erfassten Ausführungsform war ursprünglich daran gedacht, dass die Installation als Stoffaustauschboden ausgebildet ist. Solche Stoffaustauschböden sind aus sogenannten Trays zusammengesetzt, die entweder als Siebboden oder auch aus versetzten Rohrreihen ausgebildet sind. Das Gas strömt hier von unten durch die Trays und bildet durch den hohen Widerstand der Trays mit der von oben kommenden Flüssigkeit eine Sprudelschicht oberhalb der Trays, in der ein sehr intensiver Stoffaustausch stattfindet. Der S02-Abscheidegrad wird dadurch deutlich verbessert, allerdings auf Kosten eines höheren Energieverbrauches. Die Installation kann dabei dafür sorgen, den Energieverbrauch über die Zeit zu reduzieren, wenn die Funktion der aus Rohrreihen aufgebauten Trays nur bei Bedarf hinzugeschaltet wird.

Die erfindungsgemäß ausgebildete Installation ist vorzugsweise Teil eines Rauchgaswäschers.

Bei einer weiteren Ausführungsform der Erfindung weist die Installation eine Einrichtung zur Erfassung eines Parameters und eine Steuereinheit auf, die ein von der Parametererfassungseinrichtung empfangenes Signal verarbeitet und in Abhängigkeit davon die Bewegungseinrichtung ansteuert, um die erste oder zweite Lage in die weitere Betriebsstellung oder Außerbetriebsstellung zu bringen.

Im einfachsten Fall kann die Bewegungseinrichtung manuell ein- und ausgeschaltet werden, wenn beispielsweise eine Au-ßerbetriebnahme einer Lage gewünscht wird. Dieser Vorgang kann automatisiert werden, wenn ein Sensor einen Parameter erfasst, der an eine Steuereinheit weitergegeben wird, welche die Bewegungseinrichtung betätigt. Besonders bevorzugt wird eine Ausführungsform, bei der die Parametererfassungseinrichtung einen Parameter des Gasstromes erfasst. Beispielsweise kann hierbei die Staubbeladung, der S02-Anteil etc. des Gasstromes über einen Sensor gemessen werden, der dann sein Signal an die Steuereinheit weitergibt.

Die Steuereinheit selbst kann ein von der Parametererfassungseinrichtung empfangenes Signal mit einem Schwellenwert vergleichen und in Abhängigkeit von diesem Vergleich die Bewegungseinrichtung betätigen.

Erfindungsgemäß kann die Bewegungseinrichtung eine Lage der Installation parallel zur Achse des Gasströmungskanales oder senkrecht hierzu bewegen. In einer, nicht durch die unabhängigen Ansprüche erfassten, weiteren Ausgestaltung kann die Bewegungseinrichtung eine Lage der Installation zusätzlich oder alternativ durch Verkippen bewegen. Im ersten Fall wird hierbei der Abstand zwischen den beiden Lagen der Installation vergrößert oder verkleinert. Wird der Abstand von einer optimalen Stellung aus vergrößert, wird die bewegte Lage letztendlich in eine Außerbetriebsstellung bewegt, so dass hier kein Agglomerationseffekt mehr stattfinden kann. Eine Bewegung der Lage senkrecht zur Achse des Gasströmungskanales führt einmal zu einem seitlichen Herausfahren der Lage aus dem Gasströmungskanal und einmal zu einem Verschieben in einer um 90° veränderten Richtung, bei der die Überlappung der stabförmigen Elemente der beiden Lagen verändert wird. Wenn die stabförmigen Elemente in senkrechter Richtung deckungsgleich angeordnet sind, ist ebenfalls eine Außerbetriebsstellung erreicht, da dann keine Umlenkung des Gasstromes mehr stattfindet.

Was die Konstruktion der Bewegungseinrichtung selbst anbetrifft, so umfasst diese vorzugsweise wasserbetriebene Hydraulikzylinder. Diese wasserbetriebenen Hydraulikzylinder können mit einer Spüleinrichtung für die Installation gekoppelt sein, so dass bei einer Inbetriebnahme der Spüleinrichtung gleichzeitig die Bewegungseinrichtung für eine Lage betätigt wird. Dies gilt speziell in Fällen, wenn die Installation kontinuierlich gespült wird. Wenn es sich nur um eine Tropfenabscheiderreinigung (1 min/Stunde) handelt, macht es natürlich keinen Sinn, nur für diese Zeit den Agglomerator zu verfahren. In diesem Fall müssen die Hydraulikzylinder unabhängig von den Tropfenabscheidern angesteuert werden, aber immerhin mit dem gleichen Medium. Der Vorteil des Betriebsmittels Wasser liegt darin, dass es für die Spülung der Installation ohnehin verwendet wird und so beim Einschalten und Ausschalten der Spülung auch gleichzeitig eine Lage verfahren werden kann.

Bei einer kippbaren Lagerung einer Lage über ein Gelenk kann auch das Auf- und Zuklappen mithilfe von Wasser-Hydraulikzylindern erfolgen.

Das seitliche Verschieben der Lagen zueinander, so dass diese im Betrieb ohne Funktion fluchtend zueinander stehen und im anderen Fall versetzt zueinander angeordnet sind, kann ebenfalls mit Wasser-Hydraulikzylindern erfolgen.

Mit der erfindungsgemäßen Lösung ist auch eine Abstandseinstellung der beiden Lagen voneinander möglich durch Zusammenwirken der Parametererfassungseinrichtung (Sensorik), der Steuereinheit und der Bewegungseinrichtung. Ähnliches trifft für die Überlappung der stabförmigen Elemente der beiden Lagen zu. Auf diese Weise lassen sich optimierte Einstellungen der Installation erreichen.

Die erfindungsgemäß ausgebildete Installation betrifft einen Gasstrom, der mit Feststoffpartikeln oder mit Flüssigkeitspartikeln beladen sein kann. Die hier beschriebene Installation kann in Gasströmungskanälen in Verbindung mit nachfolgenden Tropfenabscheidern, beispielsweise Lamellenabscheidern, eingesetzt werden. Die Installation weist mindestens eine erste und eine zweite Lage auf, wobei es sich versteht, dass auch mehrere Lagen angeordnet sein können.

Die Erfindung wird nachfolgend anhand von Ausführungsbeispielen in Verbindung mit der Zeichnung im Einzelnen erläutert. Es zeigen:
- Figur 1: eine schematische Seitenansicht eines Gasströmungskanales, der mit einer Installation versehen ist;
- Figur 2: eine Ansicht wie Figur 1 mit einem anderen, nicht erfindungsgemässen Ausführungsbeispiel einer Installation;
- Figur 3: eine Ansicht wie Figur 1 (um 90° versetzt) mit noch einem anderen Ausführungsbeispiel einer Installation;
- Figur 4: eine Ansicht wie Figur 3 nach dem Bewegen der unteren Lage des Agglomerators;
- Figur 5: eine weitere schematische Seitenansicht der Installation der Figur 1;
- Figur 6: eine Seitenansicht der Ausführungsform der Figur 1 um 90° gedreht; und
- Figur 7: eine schematische Detailansicht eines Hydraulikzylinders.

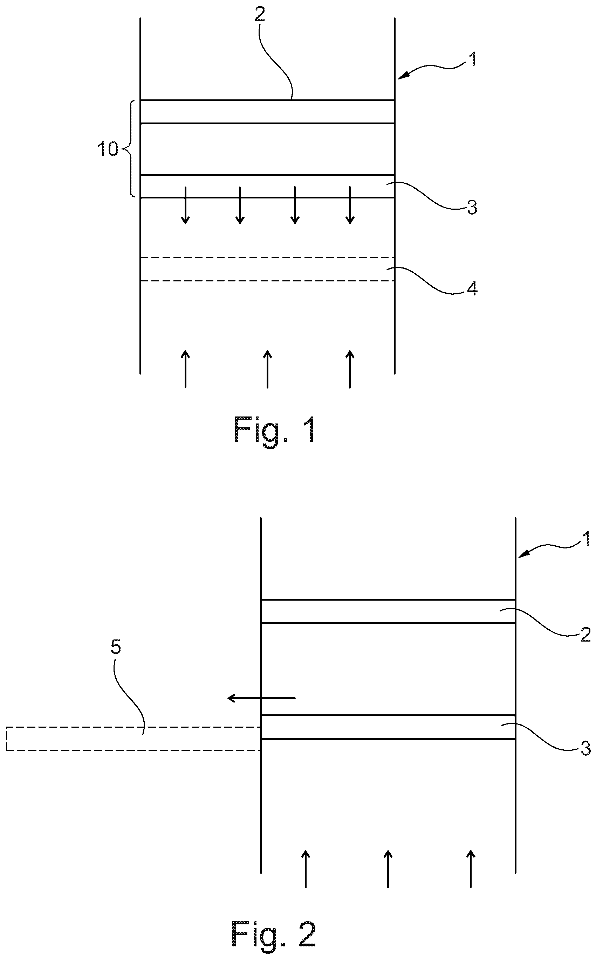

Figur 1 zeigt schematisch einen Gasströmungskanal 1 einer Rauchgaswaschanlage. Im Gasströmungskanal 1 befindet sich eine Installation 10, bei der es sich um einen Agglomerator handelt, der sich aus einer ersten (oberen) Lage 2 von parallel zueinander angeordneten stabförmigen Elementen und einer zweiten (unteren) Lage 3 von parallel zueinander angeordneten stabförmigen Elementen handelt. Die stabförmigen Elemente der ersten Lage 2 und der zweiten Lage 3 sind dabei versetzt zueinander angeordnet, so dass sie sich in Gasströmungsrichtung (von unten nach oben) überlappen und sich dazwischen eine gekrümmte Strömungsbahn ausbildet.

Bei dieser Ausführungsform ist die zweite untere Lage 3 des Agglomerators beweglich angeordnet. Wie durch die Pfeile angedeutet, kann sie aus der mit durchgezogenen Linien angedeuteten Stellung in eine gestrichelt angedeutete Stellung 4 nach unten bewegt werden. Wenn sich die zweite Lage in der unteren Stellung 4 befindet, besitzen die beiden Lagen 2, 3 einen größeren Abstand voneinander, die eine Au-ßerbetriebsstellung entspricht. Wenn der Agglomerator daher außer Betrieb gesetzt werden soll, wird die untere Lage 3 über eine hier nicht gezeigte Bewegungseinrichtung nach unten in die Stellung 4 bewegt.

Bei der, nicht durch die unabhängigen Ansprüche erfassten, Ausführungsform der Figur 2 ist ebenfalls eine Installation vorgesehen, die als Agglomerator ausgebildet ist und eine erste obere Lage 2 sowie eine zweite untere Lage 3 aufweist. Beide Lagen setzen sich aus nebeneinander mit Abstand angeordneten stabförmigen Elementen, hier Rohren, zusammen. Um die zweite Lage 3 in einer Außerbetriebsstellung zu bringen, wird hierbei die Lage aus dem Gasströmungskanal 1 seitlich herausbewegt, wie bei 5 gestrichelt dargestellt.

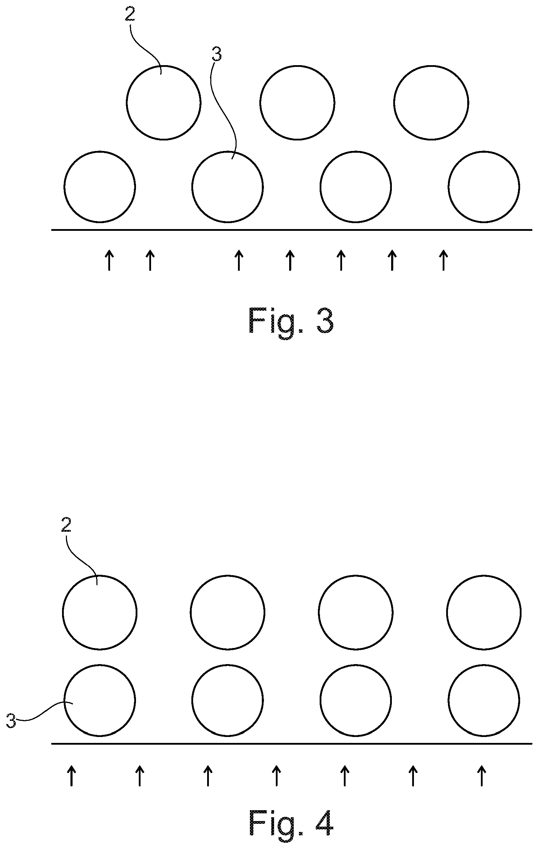

Bei der in Figur 3 und 4 dargestellten Ausführungsform werden die stabförmigen Elemente der zweiten unteren Lage 3 senkrecht zur Achse des Strömungskanales 1 in der Zeichnungsebene von links nach rechts bewegt, so dass die Überlappung der stabförmigen Elemente der beiden Lagen 2, 3 zu Null wird. Wenn die stabförmigen Elemente beider Lagen fluchten, ist die Installation außer Betrieb gesetzt, da keine Strömungsumlenkung mehr erfolgt.

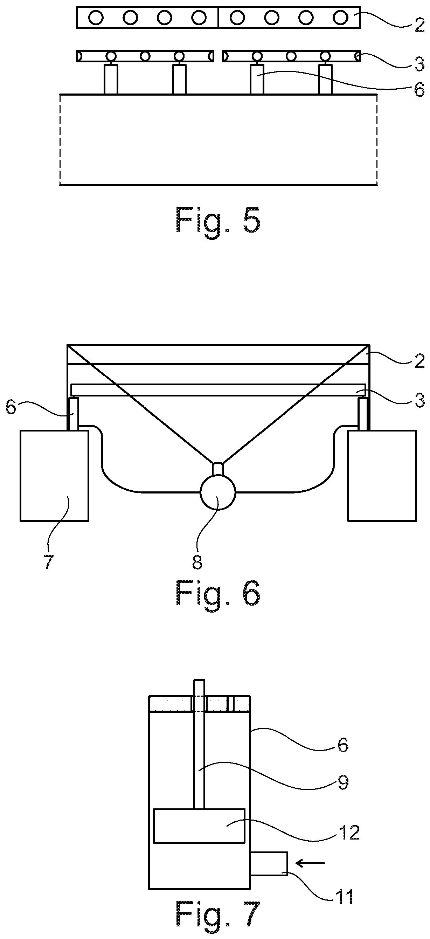

Die Figuren 5 bis 7 zeigen die in Figur 1 dargestellte erste Ausführungsform in genaueren Darstellungen. In Figur 5 erkennt man vier Hydraulikzylinder 6, die unter der zweiten Lage 3 angeordnet sind und diese parallel zur Achse des Strömungskanales bewegen. Figur 6 zeigt die Lagerung der Installation auf Unterstützungsträgern 7, auf denen die Hydraulikzylinder 6 angeordnet sind, welche die zweite unter Lage 3 der Installation tragen. Ferner ist ein Düsenrohr 8 dargestellt, das zum kontinuierlichen Besprühen der Installation über Schläuche dient. Weitere Schläuche führen vom Düsenrohr 8 zu den Hydraulikzylindern 6.

Figur 7 zeigt einen Hydraulikzylinder 6 im Detail mit einer Kolbenstange 9 und einem Kolben 12 sowie einer Wasserzuführung 11.

Diese Ausführungsform ist so ausgebildet, dass beim Einschalten der Spülung (über die Düse 8) die untere Lage 3 über die Hydraulikzylinder 6 angehoben wird, sobald der Druck in den Hydraulikzylindern ansteht. Typischerweise beträgt dieser 2 bar. Der hier dargestellte Rohragglomerator weist in diesem Zustand einen kleinen Grenztropfen und den dazugehörigen Druckverlust auf. Sobald die Spülung abgestellt wird, fährt die untere Lage 3 in ihre Ausgangsposition zurück. Dann hat der Rohragglomerator einen geringen Druckverlust und einen großen Grenztropfen. Das Zurückfahren in die Ausgangsposition geschieht idealerweise durch das Eigengewicht der unteren Lage 3. Sollte das nicht ausreichen, kann das natürlich auch über einen zweiten Wasseranschluss im Hydraulikzylinder 6 realisiert werden. Dann müsste aber von außen eine zweite Zuleitung zu den Hydraulikzylindern gelegt werden.

## Patentansprüche

1. Als Agglomerator ausgebildete Installation in einem Gasströmungskanal mit einer ersten Lage und einer zweiten hierzu versetzten Lage aus waagerecht und im Abstand voneinander jeweils in einer Ebene quer zur Gasströmungsrichtung angeordneten stabförmigen Elementen, die sich quer über den Gasströmungskanal erstrecken, wobei die stabförmigen Elemente der ersten Lage relativ zu den stabförmigen Elementen der zweiten Lage versetzt angeordnet sind, **dadurch gekennzeichnet, dass** sie eine Einrichtung umfasst zur Bewegung der zweiten Lage (3) relativ zur ersten Lage (2) oder der ersten Lage (2) relativ zur zweiten Lage (3) aus einer ersten Betriebsstellung in weitere Betriebsstellungen und/oder eine Außerbetriebsstellung durch Verschieben der Lage (2, 3) derart parallel zur Achse des Gasströmungskanales (1), dass der Abstand zwischen den Lagen (2, 3) vergrößert wird bis kein Agglomerationseffekt mehr stattfinden kann und dadurch die Außerbetriebsstellung erreicht ist, oder derart senkrecht zur Achse des Gasströmungskanales (1), dass die stabförmigen Elemente der Lagen (2, 3) in Gasströmungsrichtung deckungsgleich und damit die Lagen (2, 3) in der Außerbetriebsstellung sind.

2. Installation nach einem der vorangehenden Ansprüche, **dadurch gekennzeichnet, dass** die stabförmigen Elemente als Rohre ausgebildet sind.

3. Installation nach einem der vorangehenden Ansprüche, **dadurch gekennzeichnet, dass** sie eine Einrichtung zur Erfassung eines Parameters und eine Steuereinheit aufweist, die ein von der Parametererfassungseinrichtung empfangenes Signal verarbeitet und in Abhängigkeit davon die Bewegungseinrichtung ansteuert, um die erste oder zweite Lage (2, 3) in die weitere Betriebsstellung oder Außerbetriebsstellung zu bringen.

4. Installation nach Anspruch 3, **dadurch gekennzeichnet, dass** die Parametererfassungseinrichtung einen Parameter des Gasstromes erfasst.

5. Installation nach Anspruch 3 oder 4, **dadurch gekennzeichnet, dass** die Steuereinheit ein von der Parametererfassungseinrichtung empfangenes Signal mit einem Schwellenwert vergleicht und in Abhängigkeit von diesem Vergleich die Bewegungseinrichtung betätigt.

6. Installation nach einem der vorangehenden Ansprüche, **dadurch gekennzeichnet, dass** die Bewegungseinrichtung der Lagen (2, 3) wasserbetriebene Hydraulikzylinder (6) umfasst.

7. Installation nach Anspruch 6, **dadurch gekennzeichnet, dass** die wasserbetriebenen Hydraulikzylinder (6) mit einer Spüleinrichtung (8) für die Installation gekoppelt sind.

8. Rauchgaswäscher umfassend eine Installation in einem Gasströmungskanal des Rauchgaswäschers nach einem der Ansprüche 1 bis 7.

## Claims

1. An installation designed as an agglomerator in a gas flow channel having a first layer and a second layer that is offset therefrom, said layers consisting of rod-shaped elements that are arranged horizontally and at a distance from one another in each case in a plane transverse to the gas flow direction and that extend across the gas flow channel, wherein the rod-shaped elements of the first layer are arranged so as to be offset relative to the rod-shaped elements of the second layer, **characterized in that** said installation comprises an apparatus for moving the second layer (3) relative to the first layer (2) or the first layer (2) relative to the second layer (3) from a first operating position into further operating positions and/or a non-operating position by shifting the layer (2, 3) in such a way parallel to the axis of the gas flow channel (1) that the distance between the layers (2, 3) is increased until an agglomeration effect can no longer take place and the non-operating position is thereby reached, or in such a way perpendicularly to the axis of the gas flow channel (1) that the rod-shaped elements of the layers (2, 3) are congruent in the gas flow direction and thus the layers (2, 3) are in the non-operating position.

2. The installation according to one of the preceding claims, **characterized in that** the rod-shaped elements are designed as pipes.

3. The installation according to one of the preceding claims, **characterized in that** it has an apparatus for recording a parameter and a control unit which processes a signal received from the parameter-recording apparatus and controls the movement apparatus depending on said signal in order to bring the first or second layer (2, 3) into the further operating position or non-operating position.

4. The installation according to claim 3, **characterized in that** the parameter-recording apparatus records a parameter of the gas flow.

5. The installation according to claim 3 or 4, **characterized in that** the control unit compares a signal received from the parameter-recording apparatus with a threshold value and actuates the movement apparatus depending on this comparison.

6. The installation according to one of the preceding claims, **characterized in that** the movement apparatus for the layers (2, 3) comprises water-powered hydraulic cylinders (6).

7. The installation according to claim 6, **characterized in that** the water-powered hydraulic cylinders (6) are coupled to a flushing apparatus (8) for the installation.

8. A flue gas scrubber comprising an installation in a gas flow channel of the flue gas scrubber according to one of claims 1 to 7.

## Revendications

1. Installation conçue comme un agglomérateur dans un canal d'écoulement de gaz, comprenant une première couche et une deuxième couche décalée par rapport à celle-ci, lesquelles sont constituées d'éléments en forme de tiges disposés horizontalement et à distance les uns des autres, respectivement dans un plan transversal à la direction d'écoulement de gaz, lesquels s'étendent à travers le canal d'écoulement de gaz, dans laquelle les éléments en forme de tiges de la première couche sont disposés de façon décalée par rapport aux éléments en forme de tiges de la deuxième couche, **caractérisée en ce qu'**elle comporte un dispositif permettant de déplacer la deuxième couche (3) par rapport à la première couche (2) ou la première couche (2) par rapport à la deuxième couche (3), à partir d'une première position opérationnelle vers d'autres positions opérationnelles et/ou vers une position non opérationnelle, par déplacement de la couche (2, 3) parallèlement à l'axe du canal d'écoulement de gaz (1) de manière à augmenter la distance entre les couches (2, 3), jusqu'à ce qu'aucun effet d'agglomération ne puisse plus se produire et que la position non opérationnelle soit ainsi atteinte, ou par déplacement perpendiculairement à l'axe du canal d'écoulement de gaz (1) de manière à ce que les éléments en forme de tiges des couches (2, 3) coïncident entre eux dans la direction d'écoulement de gaz et à ce que les couches (2, 3) se trouvent ainsi dans la position non opérationnelle.

2. Installation selon l'une des revendications précédentes, **caractérisée en ce que** les éléments en forme de tiges sont conçus comme des tuyaux.

3. Installation selon l'une des revendications précédentes, **caractérisée en ce qu'**elle présente un dispositif de détection d'un paramètre et une unité de commande, laquelle traite un signal reçu depuis le dispositif de détection de paramètre et actionne le dispositif de déplacement en fonction de celui-ci, afin d'amener la première ou la deuxième couche (2, 3) dans l'autre position opérationnelle ou dans la position non opérationnelle.

4. Installation selon la revendication 3, **caractérisée en ce que** le dispositif de détection de paramètre détecte un paramètre du flux de gaz.

5. Installation selon la revendication 3 ou 4, **caractérisée en ce que** l'unité de commande compare un signal reçu depuis le dispositif de détection de paramètre avec une valeur seuil et active le dispositif de déplacement en fonction de cette comparaison.

6. Installation selon l'une des revendications précédentes, **caractérisée en ce que** le dispositif de déplacement des couches (2, 3) comporte des cylindres hydrauliques entraînés par l'eau (6).

7. Installation selon la revendication 6, **caractérisée en ce que** les cylindres hydrauliques entraînés par l'eau (6) sont accouplés à un dispositif de rinçage (8) destiné à l'installation.

8. Laveur de gaz de fumée comportant une installation dans un canal d'écoulement de gaz du laveur de gaz de fumée selon l'une des revendications 1 à 7.
